# DEMANDE DE BREVET EUROPEEN

(11) **EP 1 209 691 A1**
(43) Date de publication de la demande: **29.05.2002**
(21) Numéro de dépôt: 01403025.8
(22) Date de dépôt: 26.11.2001
(51) Int. Cl.: G21C 17/06, G21F 5/008, G21F 5/06

(54) **Procédé et dispositif de contrôle des efforts appliqués sur un assemblage combustible, dans un emballage de transport**

(30) Priorité: 28.11.2000 FR 0015317
(71) Demandeur: COMPAGNIE GENERALE DES MATIERES NUCLEAIRES, 78140 Velizy Villacoublay (FR)
(72) Inventeur: Soriano, Gérard, 30200 Saint Laurent de Carnols (FR)
(74) Mandataire: Poulin, Gérard

(57) **Abrégé**

Procédé et dispositif de contrôle des efforts appliqués sur un assemblage combustible, dans un emballage de transport.

Le contrôle s'effectue en introduisant un gabarit de contrôle (10) dans un logement de l'emballage, destiné à recevoir l'assemblage. Le gabarit (10) est équipé de capteurs d'efforts (20), au droit de chacun des dispositifs prévus dans le logement, pour assurer le serrage de l'assemblage. On mesure ainsi simultanément, de façon fiable et reproductible, les efforts de serrage exercés par tous les dispositifs qui équipent le logement. Un logiciel permet avantageusement de comparer les résultats des mesures à des valeurs limites minimales et maximales prédéfinies.

## Description

### Domaine technique

L'invention concerne un procédé conçu pour contrôler les efforts de serrage appliqués sur un assemblage de combustible nucléaire, lors de son transport à l'intérieur d'un logement prévu à cet effet, dans un emballage de transport

Plus précisément, l'invention concerne le contrôle des efforts exercés sur l'assemblage par des moyens de serrage implantés dans le logement, en des emplacements déterminés. Ces moyens de serrage ont pour fonction d'immobiliser l'assemblage dans son logement, au cours du transport.

L'invention a aussi pour objet un dispositif permettant de mettre en oeuvre ce procédé.

Le procédé et le dispositif selon l'invention peuvent être utilisés pour contrôler les efforts appliqués sur tout type d'assemblage en cours de transport. Ils concernent notamment aussi bien des assemblages neufs que des assemblages usagés et s'appliquent indifféremment au transport d'assemblages non conditionnés qu'au transport d'assemblages placés individuellement dans des étuis. Dans une application particulière, non limitative, de l'invention, les assemblages transportés sont des assemblages de section carrée, de type MOX, destinés à des réacteurs nucléaires PWR ou BWR.

### Etat de la technique

Les assemblages de combustible nucléaire utilisés dans les réacteurs nucléaires doivent être transportés de leur site de fabrication jusqu'au site du réacteur lorsqu'ils sont neufs et du site du réacteur jusqu'à un site de démantèlement lorsqu'ils sont usagés.

Pour effectuer chacun de ces transports, il est d'usage de placer individuellement chaque assemblage dans un logement prévu à cet effet dans un panier, lui-même reçu dans un emballage de transport.

Afin de garantir l'intégrité mécanique de l'emballage lors de son transport, on immobilise les assemblages dans leurs logements avant de procéder à la fermeture de l'emballage. A cet effet, on utilise des dispositifs de serrage intégrés au panier. Ces dispositifs occupent soit une position serrée, lors du transport, soit une position desserrée, lors des manutentions et lorsque les logements sont vides.

Plus précisément, les dispositifs de serrage sont situés sur deux faces adjacentes de chaque logement, à des niveaux déterminés, de façon à pouvoir agir latéralement sur un assemblage reçu dans ledit logement, au niveau des grilles d'espacement de cet assemblage. Les dispositifs de serrage sont équipés de patins qui viennent en appui sur les faces en regard de l'assemblage, ce qui a pour effet de serrer celui-ci transversalement contre les faces opposées du logement.

Les efforts de serrage doivent être suffisants pour empêcher tout mouvement de l'assemblage dans son logement, sous l'effet des sollicitations dynamiques auxquelles il est soumis lors du transport.

Par ailleurs, les efforts de serrage doivent aussi rester inférieurs à une valeur maximale qui dépend de la résistance structurelle des grilles d'espacement des assemblages. Cette résistance structurelle varie elle-même en fonction du type d'assemblage transporté et notamment selon qu'il s'agit d'un assemblage de réacteur PWR ou d'un assemblage de réacteur BWR.

Pour chaque série de patins, les efforts de serrage qui sont appliqués sur l'assemblage doivent donc être aussi proches que possible d'une valeur nominale, intermédiaire entre une valeur minimale et une valeur maximale. Ces différentes valeurs varient notamment en fonction de la position des patins par rapport à l'assemblage, c'est-à-dire selon que le serrage s'effectue vers le haut, vers le bas ou horizontalement.

Le bon fonctionnement des dispositifs de serrage et les valeurs des efforts qu'ils délivrent sont vérifiés sur les emballages neufs, après chaque campagne de maintenance et, de plus en plus fréquemment, avant chaque campagne de transport.

Dans l'état actuel de la technique, on mesure les efforts exercés par les dispositifs de serrage au moyen d'un peson dynamométrique fixé au bout d'une perche. La perche permet d'introduire le peson à l'intérieur de chaque alvéole et de le déplacer manuellement, successivement au droit de chaque patin de serrage, pour mesurer un à un les efforts qu'ils délivrent.

Ce procédé de contrôle présente de nombreux inconvénients.

Ainsi, les mesures ainsi effectuées sont difficiles et longues à réaliser. En effet, un même logement peut contenir jusqu'à 18 patins de serrage, répartis sur deux faces, et un même emballage peut comporter jusqu'à 12 logements.

Par ailleurs, le résultat des mesures effectuées est fortement tributaire de la précision du positionnement du peson par rapport à chaque patin. Du fait que ce positionnement est effectué manuellement par l'opérateur, les résultats sont peu répétitifs et peu fiables, ce qui les rend contestables.

### Exposé de l'invention

L'invention a précisément pour objet un procédé de contrôle des efforts de serrage appliqués sur un assemblage reçu dans un logement prévu dans un emballage de transport, ce procédé permettant d'améliorer la précision des mesures et de diminuer les temps opératoires par rapport aux procédés de l'art antérieur.

Conformément à l'invention, ce résultat est obtenu au moyen d'un procédé de contrôle des efforts de serrage appliqués, sur un assemblage de combustible nucléaire, par des moyens de serrage implantés en des emplacements déterminés, à l'intérieur d'un logement prévu dans un emballage de transport, caractérisé en ce qu'il comprend les étapes successives suivantes
- introduction, dans ledit logement, d'un gabarit de contrôle équipé de moyens de mesure d'efforts précisément localisés au droit de chacun desdits emplacements ; et
- mesure simultanée des efforts exercés par tous les moyens de serrage implantés dans le logement.

L'utilisation d'un gabarit de contrôle portant des moyens de mesure d'efforts précisément localisés en face des patins de serrage permet de garantir la fiabilité et la reproductibilité des mesures et de diminuer sensiblement leur durée. Du fait que le gabarit présente précisément la même géométrie extérieure que l'assemblage prévu pour être reçu dans le logement, les mesures obtenues lorsque les dispositifs de serrage sont dans leur position serrée sont parfaitement représentatives des efforts qui seront appliqués ensuite sur l'assemblage.

Selon un mode de réalisation préféré de l'invention, les efforts mesurés sont ensuite comparés avec des valeurs minimale et maximale prédéfinies.

Dans ce cas, on effectue avantageusement la comparaison au moyen d'un logiciel de traitement des mesures.

Il est également possible d'afficher les résultats de la comparaison ainsi effectuée.

De préférence, on équipe le gabarit de contrôle de moyens de mesure sur deux faces adjacentes dudit gabarit.

Par ailleurs, les moyens de mesure peuvent notamment être constitués par des pesons dynamométriques.

L'invention a également pour objet un dispositif de contrôle des efforts de serrage appliqués, sur un assemblage de combustible nucléaire, par des moyens de serrage implantés en des emplacements déterminés, à l'intérieur d'un logement prévu dans un emballage de transport, caractérisé en ce qu'il comprend un gabarit de contrôle apte à être introduit dans le logement, ledit gabarit étant équipé de moyens de mesure d'efforts aptes à être précisément localisés au droit de chacun desdits emplacements, lorsque le gabarit est placé dans le logement, pour effectuer une mesure simultanée des efforts exercés par tous les moyens de serrage implantés dans le logement.

### Brève description des dessins

On décrira à présent, à titre d'exemple non limitatif, un mode de réalisation préféré de l'invention, en se référant aux dessins annexés, dans lesquels :
- la figure 1 est une vue en perspective qui représente schématiquement un dispositif de contrôle d'efforts de serrage conforme à l'invention ; et
- la figure 2 est une vue en coupe transversale, qui représente schématiquement un logement d'un emballage de transport, dans lequel a été introduit le gabarit de contrôle du dispositif de contrôle de la figure 1.

### Description détaillée d'un mode de réalisation préféré de l'invention

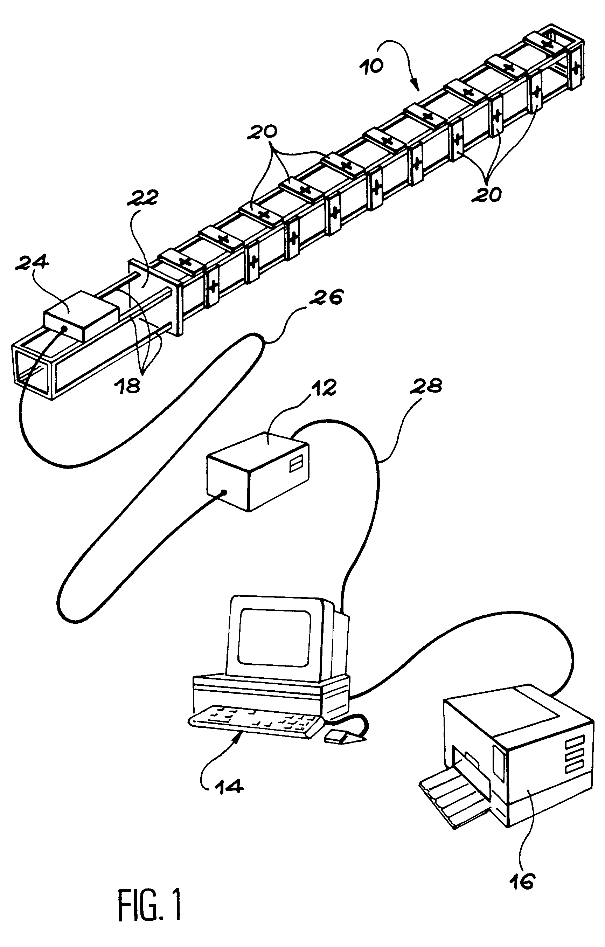

Comme on l'a représenté schématiquement sur la figure 1, un dispositif de contrôle conforme à l'invention comprend principalement un gabarit de contrôle 10. Dans le mode de réalisation représenté, le dispositif comprend également un boîtier électronique 12, un ordinateur 14 et une imprimante 16.

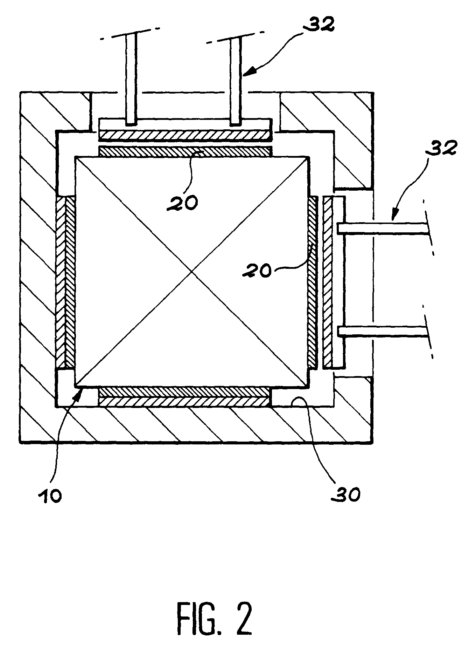

Le gabarit de contrôle 10 a une forme et des dimensions extérieures strictement identiques à celles d'un assemblage de combustible nucléaire. Plus précisément, la forme et les dimensions du gabarit 10 correspondent à celles de l'assemblage qui doit normalement être reçu dans le logement 30 (figure 2) dont les moyens de serrage 32 doivent être contrôlés. Selon un agencement bien connu de l'homme du métier et qui ne sera donc pas décrit ici en détails, plusieurs logements 30 de ce type sont habituellement formés dans un panier d'un emballage de transport.

Dans le mode de réalisation préféré de l'invention illustré sur la figure 1, le gabarit de contrôle 10 a une section carrée. Cette section correspond à celle de la plupart des assemblages combustibles utilisés notamment dans les réacteurs à eau.

Dans la pratique, le gabarit 10 peut présenter une structure rigide de conception quelconque. Dans le mode de réalisation représenté, cette structure est matérialisée par une carcasse évidée, formée d'un assemblage de tiges rigides 18 qui s'étendent selon les arêtes du gabarit.

Sur deux de ses faces, adjacentes l'une à l'autre et visibles sur la figure 1, le gabarit de contrôle 10 est équipé de moyens de mesure d'efforts 20. Ces moyens de mesure d'efforts 20 sont constitués, de préférence, par des pesons dynamométriques, c'est-à- dire par des plaques flexibles équipées de jauges de contraintes. Les plaques flexibles sont fixées sur les tiges rigides 18, en des emplacements précis. Ces emplacements sont choisis afin de coïncider avec les emplacements déterminés auxquels sont situés les moyens de serrage 32, à l'intérieur du logement 30 prévu pour recevoir l'assemblage.

Ainsi, lorsque le gabarit de contrôle 10 est introduit dans le logement 30 prévu pour recevoir l'assemblage, l'un des moyens de mesure d'efforts 20 est précisément localisé au droit de chacun des emplacements dans lesquels se trouvent les moyens de serrage 32. La manoeuvre de chacun des moyens de serrage a alors pour effet de déformer les plaques flexibles d'une valeur représentative de l'effort de serrage qui lui est appliqué. Les jauges de contraintes portées par les plaques mesurent les déformations des plaques flexibles et, par conséquent, la valeur de chacun des efforts de serrage.

Afin d'obtenir un positionnement axial précis du gabarit de contrôle 10 à l'intérieur du logement 30 prévu pour recevoir l'assemblage, on peut équiper le gabarit d'une plaque supérieure horizontale 22 prévue pour venir en appui sur la face supérieure du panier. En variante, le positionnement axial du gabarit peut aussi être assuré par la venue en appui de son extrémité inférieure (à droite sur la figure) contre le fond du logement 30.

Les jauges de contraintes des moyens de mesure 20 sont reliées, par des conducteurs électriques (non représentés), à une boîte de raccordement 24 montée sur la partie haute du gabarit 10, au-dessus de la plaque supérieure horizontale.

Un câble souple 26 assure la liaison électrique entre la boîte de raccordement 24 et le boîtier électronique 12. Ce dernier contient notamment une source d'alimentation électrique des jauges de contraintes des moyens de mesure 20, ainsi que les circuits de traitement des signaux délivrés par les jauges. Il est ainsi possible de mesurer simultanément les efforts de serrage appliqués par chacun des moyens de serrage 32 intégrés dans le logement 30 dans lequel on a placé le gabarit.

Dans le mode de réalisation préféré de l'invention illustré sur la figure 1, le boîtier électronique 12 est relié par un câble 28 à l'ordinateur 14, équipé de son imprimante 16.

Dans ce cas, un logiciel de traitement des mesures permet de comparer, pour chacun des moyens de serrage 32 équipant le logement 30, les valeurs des efforts de serrage mesurés par les moyens de mesure d'efforts 20 à des valeurs limites minimales et maximales prédéfinies. Les résultats de cette comparaison sont affichés en temps réel sur l'écran de l'ordinateur et édités par l'imprimante, à chaque fois que l'opérateur le désire.

Bien entendu, il est également possible d'exploiter manuellement les valeurs des efforts de serrage mesurés, sans l'aide d'un ordinateur. Il est aussi possible de recourir à un logiciel de traitement des mesures comme indiqué précédemment, mais d'exploiter différemment les résultats du traitement effectué par ce logiciel, par exemple sans recourir à une imprimante.

Conformément à l'invention et comme l'illustre plus précisément la figure 2, le contrôle est effectué en introduisant le gabarit de contrôle 10 dans le logement 30 prévu pour recevoir l'assemblage, en lieu et place de celui-ci. Comme on l'a décrit, chacun des moyens de mesure d'efforts 20 est alors précisément localisé au droit de chacun des emplacements des moyens de serrage 32 implantés dans ledit logement.

Les moyens de serrage 32 sont alors manoeuvrés de la même manière que si le logement 30 contenait un assemblage. Cette manoeuvre a pour effet de déformer les plaques flexibles des moyens de mesure d'efforts 20. Cela se traduit par une déformation comparable des jauges de contraintes. Cette déformation est proportionnelle à l'effort de serrage appliqué par chacun des moyens de serrage 32, de telle sorte que cet effort est mesuré dans le boîtier électronique 12, simultanément pour chacun des moyens de serrage implantés dans le logement 30 considéré.

Comme on l'a vu, cette mesure est avantageusement complétée par une comparaison de chacune des valeurs mesurées avec des valeurs limites minimales et maximales prédéfinies.

## Revendications

1. Procédé de contrôle des efforts de serrage appliqués, sur un assemblage de combustible nucléaire, par des moyens de serrage (32) implantés en des emplacements déterminés, à l'intérieur d'un logement (30) prévu dans un emballage de transport, **caractérisé en ce qu'**il comprend les étapes successives suivantes
- introduction, dans ledit logement, d'un gabarit de contrôle (10) équipé de moyens de mesure d'efforts (20) précisément localisés au droit de chacun desdits emplacements ; et
- mesure simultanée des efforts exercés par tous les moyens de serrage (30) implantés dans le logement (30).

2. Procédé selon la revendication 1, dans lequel on compare ensuite les efforts mesurés avec des valeurs minimale et maximale prédéfinies.

3. Procédé selon la revendication 2, dans lequel on effectue ladite comparaison au moyen d'un logiciel de traitement des mesures.

4. Procédé selon l'une quelconque des revendications 2 et 3, dans lequel on affiche les résultats de ladite comparaison.

5. Procédé selon l'une quelconque des revendications 1 à 4, dans lequel on équipe le gabarit de contrôle (10) de moyens de mesure d'efforts (20) sur deux faces adjacentes dudit gabarit.

6. Procédé selon Tune quelconque des revendications 1 à 5, dans lequel on utilise des moyens de mesure (20) constitués par des pesons dynamométriques.

7. Dispositif de contrôle des efforts de serrage appliqués, sur un assemblage de combustible nucléaire, par des moyens de serrage (32) implantés en des emplacements déterminés, à l'intérieur d'un logement (30) prévu dans un emballage de transport, **caractérisé en ce qu'**il comprend un gabarit de contrôle (10) apte à être introduit dans le logement (30), ledit gabarit étant équipé de moyens de mesure d'efforts (20) aptes à être précisément localisés au droit de chacun desdits emplacements, lorsque le gabarit est placé dans le logement, pour effectuer une mesure simultanée des efforts exercés par tous les moyens de serrage implantés dans le logement.

8. Dispositif selon la revendication 7, comprenant de plus des moyens de traitement (14) aptes à comparer les efforts mesurés avec des valeurs minimale et maximale prédéfinies.

9. Dispositif selon la revendication 8, dans lequel les moyens de traitement (14) comprennent un logiciel de traitement des mesures.

10. Dispositif selon l'une quelconque des revendications 8 et 9, comprenant de plus des moyens d'affichage (16) des résultats délivrés par les moyens de traitement (14).

11. Dispositif selon l'une quelconque des revendications 7 à 10, dans lequel les moyens de mesure (20) sont placés sur deux faces adjacentes du gabarit de contrôle (10).

12. Dispositif selon l'une quelconque des revendications 7 à 10, dans lequel les moyens de mesure (20) comprennent des pesons dynamométriques.
